Europäisches Patentamt

European Patent Office

Office européen des brevets

(11) Publication number: 0 359 344
A2

# EUROPEAN PATENT APPLICATION

(21) Application number: 89202919.0

(22) Date of filing: 07.10.85

(51) Int. Cl.5: H04N 1/10 , G06K 7/14 , H04N 1/46 , F16H 25/24

(30) Priority: 15.10.84 IT 6801484

(43) Date of publication of application:
21.03.90 Bulletin 90/12

(60) Publication number of the earlier application in accordance with Art.76 EPC: 0 180 350

(84) Designated Contracting States:
DE FR GB

(71) Applicant: Ing. C. Olivetti & C., S.p.a.
Via G. Jervis 77
I-10015 Ivrea(IT)

(72) Inventor: Coli, Giuseppe
Via Circonvallazione 17
I-10018 Pavone Canavese (Torino)(IT)

(74) Representative: Pears, David Ashley et al
REDDIE & GROSE 16 Theobalds Road
London WC1X 8PL(GB)

(54) Arrangement for guiding and shifting a carriage of an office machine.

(57) The carriage of a digital document reader is shifted by means of a pair of worms (27) rotatable in the frame and engaging two nuts (26) at the two ends of the carriage. The worms are rotated simultaneously, e.g. by a single stepping motor (32) and a toothed belt (30) engaging pulleys integral with the worms (27).

For the purpose of reducing inertia, each worm (27) is formed together with its driving pulley by moulding a layer of plastics material on a metal core tube. The carriage supports reading elements (22) for reading a document on a support surface (10). A second carriage (143) has two nuts (42) at its ends and these engage two further worms (31) parallel to the first worms (27) and mounted on the first carriage. The second carriage (143) moves relative to the first carriage to move different colour filters into the path to the reading elements (22).

FIG.3

## ARRANGEMENT FOR GUIDING AND SHIFTING A CARRIAGE OF AN OFFICE MACHINE

The present invention relates to an arrangement for guiding and shifting a carriage of an office machine, namely a digital document reader of the type defined in the precharacterizing part of claim 1.

In such readers, the document to be read remains still on a plate and is scanned by a carriage which must shift parallel to itself step by step with great precision. Since the shift step corresponds to an elementary scanning line, this step must be all the smaller the greater the reading resolution.

An arrangement is already known (US 4 268 870) in which the fixed guide of the carriage is constituted by a pair of worms parallel to one another and rotated simultaneously, which engage two nuts borne by the carriage.

Machined worms (lead screws) are expensive and it is difficult to avoid backlash. It is already known (US 2 724 979) to construct a screw from a deformed sheet metal tube supported on a core tube. Such a screw is not suited to high precision uses. It is also known to provide a screw with self-lubricating properties by coating the threads of the screw with a plastics layer (GB 2 104 998 and DE 872 701). The latter reference also discloses an alternative in which the threads of the nut are coated with a plastics layer. In these known structures it remains necessary to machine the base thread to which the coating is applied.

In order to read colour images it is necessary to introduce different colour filters between the document and the reading elements. This is customarily effected by rotating a filter wheel between the document and reading elements (e.g. Xerox Disclosure Journal, Vol.2, No.3, May/June 1977 pp 53/54).

The object of the present invention is to provide an improved arrangement with precision and a compact arrangement of filters.

The invention is defined in claim 1 below.

The invention will be described in more detail, by way of example, and with reference to the accompanying drawings, in which:

Fig 1 is a diagrammatic partial longitudinal section of an embodiment of a digital document reader according to the invention;

Fig 2 is a plan view, partly in section, of the reader of Fig. 1;

Fig 3 is a partial cross-section on the line III-III of Fig 2;

Fig 4 is a median section on a larger scale of a control worm for shifting the carriage;

Fig 5 is a longitudinal section of a nut on a larger scale;

Fig 6 is a front view of the nut of Fig 5.

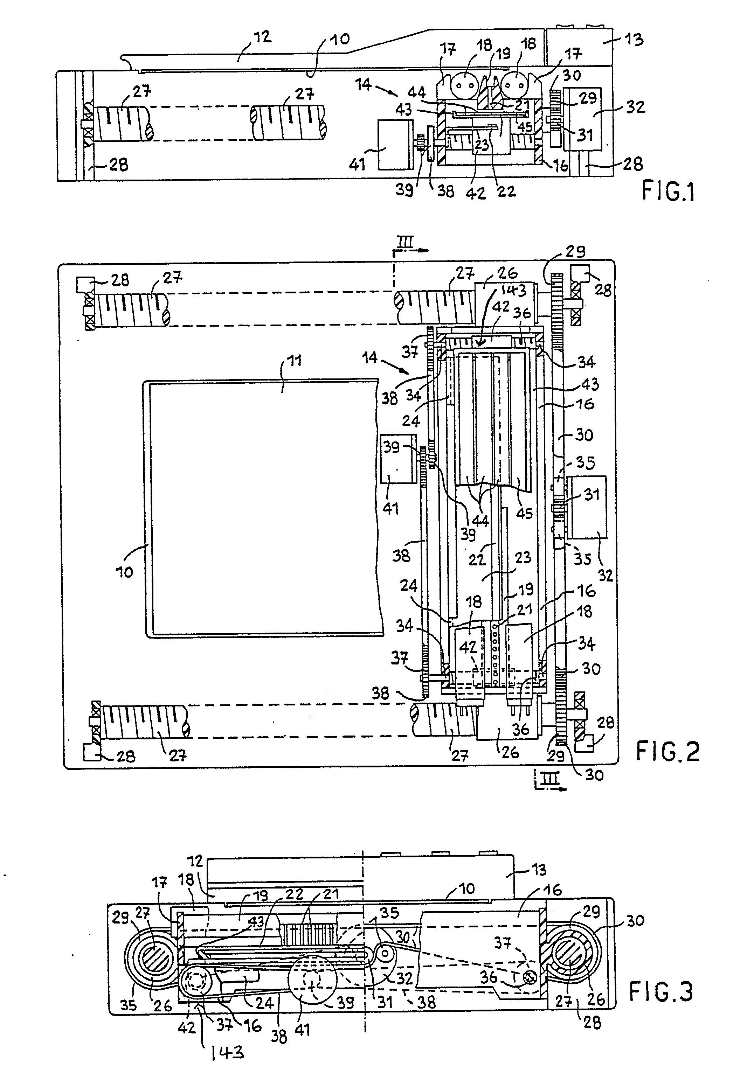

Referring to Fig 1, a plane, transparent supporting surface 10 supports a document 11 to be read. The plane surface 10 is fixed and is covered by a raisable lid 12 adapted to keep the document 11 in close contact with the surface 10. Adjacent the lid 12 there is arranged a keyboard 13 for controlling the digital reader. This is provided with a carriage 14 which comprises a frame 16 of plastics material extending so as to cover the width of the document 11 to be read (Fig 2).

The frame 16 has at both ends two seats 17 (see also Fig 3) for a pair of fluorescent lamps 18 for illuminating the document 11. Moreover, the frame 16 has a transverse seat 19 (Fig 1) in which is inserted a bar 21 of optical fibres which are spaced apart according to the width of the elementary areas, i.e. pixels, to be read on the document 11. The number of pixels per mm, generally between 3 and 12, indicates the resolving power of the reader. The bar 21 constitutes the objective of the reader and conveys the light rays reflected from the pixels to an amorphous silicon sensor 22 (Fig 2) known per se, which is carried by a plate 23 fixed to two brackets 24 of the frame 16.

The frame 16 is fast at both lateral ends with two nuts 26 and constitutes with them the carriage of the machine, which bears the lamps 18, the objective 21 and the sensor 22. The nuts 26 engage with two worms 27 which are parallel to one another and rotatable in two pairs of supports 28 fixed to the frame of the machine. Two toothed wheels 29 in engagement with a toothed belt 30 are fixed on the two worms 27. This belt is moreover guided by two belt stretchers 35 and is engaged by a pinion 31 (Fig 3) which is rotated by an electric stepping motor 32. Thus the motor 32 causes the two worms 27 to rotate simultaneously and these moreover constitute the fixed guides of the carriage.

To allow the reading of colour images, the frame 16 bears two pairs of seats 34 (Fig 2) in which there are rotatably mounted two worms 36 which are fast with two toothed wheels 37 in engagement with two corresponding toothed belts 38. These are in engagement with two pinions 39 which are rotated by a second stepping motor 41 which thus causes the two worms 36 to rotate simultaneously. The two worms 36 are in engagement with two nuts 42 fast with a frame 43, with which they form an auxiliary carriage 143. This bears three colour filters 44 adapted to be disposed selectively between the objective 21 and the sensor 22. A fourth position 45 of the frame 43 is without a filter and interposed in front of the objective. At each step of the motor 32, the carriage 14 brings the objective 21 into correspondence with an elementary line of the sheet. At the end of the scanning of the document, the motor 41 causes the auxiliary carriage 143 to shift so as to interpose the next filter 44 in correspondence with the objective 21, so that the document 11 is read three times by interposing the three filters 44 in succession.

Each of the worms 27, 36 (Fig 1) must have a low inertia, a suitable rigidity and indeformability and characteristics appropriate for damping vibrations, in order to ensure the rapidity and precision of the movements of the respective carriage. Moreover, each worm must present a high resistance to wear and a low coefficient of friction.

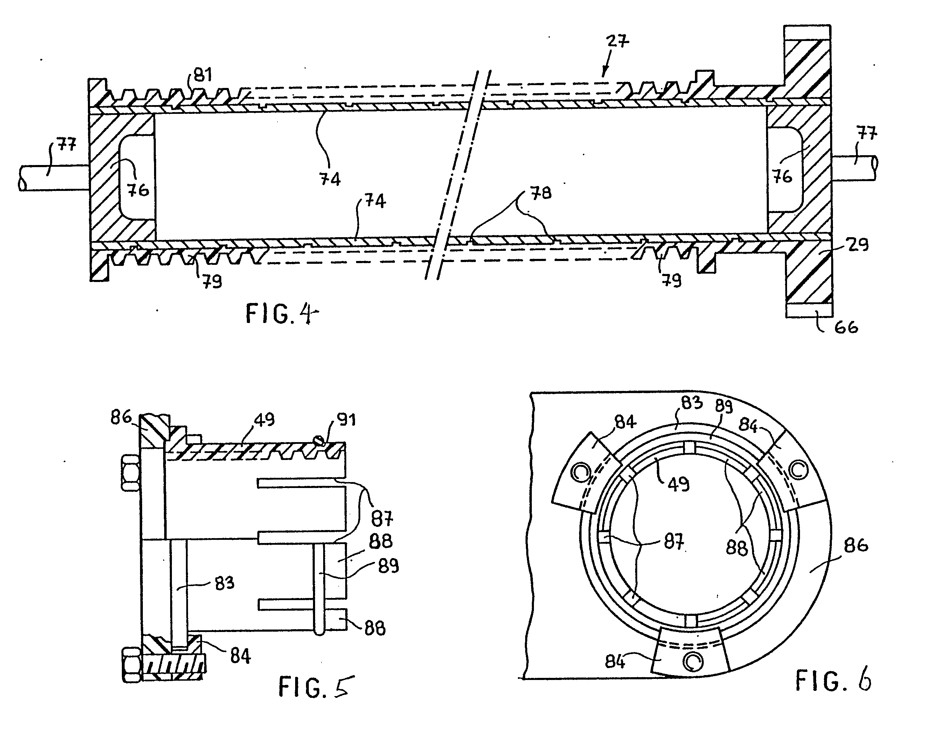

According to the invention, these characteristics are obtained by forming each worm with a core constituted by a metal tube 74 (Fig 4), for example of aluminium with a thickness of about 2 mm, which is closed at the ends by two discs 76, also of metal, each bearing a steel pin or pivot 77. For simplicity, the structure of a worm 27 is indicated in Fig 4; that of the other worms 36 however is completely like that indicated in Fig 4. On the outer surface of the core 74 there is formed a helical groove 78 with a pitch of 10 : 15 mm.

Thereupon, on the core 74 there is deposited, in a single moulding operation, a layer of plastics material 79, for example nylon, PTFE or polyethylene, which is shaped so as to present an external thread 81 with the pitch required for the transmission of the motion from the respective motor to the carriage. The layer 79 may have a minimum thickness of 2 to 3 mm in the groove of the thread and remains anchored to the core 74 by the action of the grooves 78.

By the same moulding operation, the toothed driving pulley 29 can be formed on one end. Obviously, in the case of the worms 51 and 57, instead of the toothed pulley 29, the toothed wheels 66 and 67, respectively will be formed.

Each nut 49 (Figs 5 and 6) can also be obtained by moulding with the same material as the layer 79 of the worm. The nut 49 may be provided with a flange 83 by means of which it can be subsequently fixed, for example by means of three blocks 84, to a ring 86 connected to the corresponding carriage.

For the purposes of allowing the wear which occurs in the thread of the nut and the worm to be taken up, the nut is moulded with a series of axial notches 87 extending from the end opposite the flange 83 for about one half of its length. The notches 87 create in this way a series of sectors 88 which are held in position by an elastic element, for example an elastic ring 89 inserted in an annular groove 91 in the sectors 88 themselves.

Among various possible modifications, in the embodiment of Figs 1 to 3, the two pairs of worms 27 and 36 may be actuated by two pairs of motors, each pair actuated in synchronism.

Moreover, the worms 27, 36 can be obtained by using various expedients to allow the core 74 (Fig 4) to stand the high pressures of injection of the plastics layer 79.

The present application is divided out of application No. 85 307 160.3, publication No. 0 180 350.

## Claims

1. An arrangement for guiding and shifting a carriage (14) of a digital document reader, wherein the carriage spans a document support surface (10) and is connected at its two ends to two nuts (26) respectively, which are engaged on two worms (27) respectively, these being parallel to one another and rotated simultaneously, characterised in that each worm (27) is constituted by a hollow metal core (74) on which is moulded a layer (79) of plastics material having the shape of the worm, in that the carriage (14) supports reading elements (22) of the amorphous silicon type for reading in sequence a plurality of primary colours of the pixels of a line, and by a second carriage (143) bearing a series of filters (44) and adapted to be shifted with respect to the first carriage (14) to interpose the filters in sequence between the reading elements (22) and the document.

2. An arrangement according to claim 1, characterised in that each nut (26) is formed of plastics material which is sufficiently elastic and the pitch of the worms (27) is such as to allow the taking up of any play on the worm, the nut being formed with a series of axial notches (87) to define a series of elastic sectors (88), the sectors being held in close contact with the worm (79) by an elastic ring (89).

3. An arrangement according to claim 1 or 2, characterised in that the worms (27) are moulded unitarily with a driving gear (66).

4. An arrangement according to claim 1, 2 or 3, characterized in that the first carriage (14) carries two further worms (36) parallel to the first said worms (27) and in that the second carriage (143) is connected at its two ends to two nuts (42) respectively, which are engaged on the two further worms respectively.

FIG.1

FIG.2

FIG.3

FIG. 4

FIG. 5

FIG. 6

EP 0 359 344 A2